# EUROPÄISCHE PATENTANMELDUNG

(11) **EP 0 754 484 A2**
(43) Veröffentlichungstag der Anmeldung: **22.01.1997**
(21) Anmeldenummer: 96108054.6
(22) Anmeldetag: 21.05.1996
(51) Int. Cl.: B01D 29/62, B01D 35/28

(54) **Filtriervorrichtung, insbesondere Muldenfilter**

(30) Priorität: 19.07.1995 DE 19526301
(71) Anmelder: HYDAC FILTERTECHNIK GmbH, D-66273 Sulzbach (DE)
(72) Erfinder: Gudernatsch, Wilhelm-Norbert, Dr.-Ing., 70193 Stuttgart (DE); Kimmerle, Klaus, Dr.-Ing., 66424 Homburg (DE)
(74) Vertreter: Patentanwälte Bartels, Held und Partner

(57) **Zusammenfassung**

2. Die Erfindung betrifft eine Filtriervorrichtung mit mindestens einem um seine Längsachse 20 drehbar gelagerten, mindestens eine muldenförmige Filterfläche 14 aufweisenden Filterkörper 10. Dadurch, daß die Filtriervorrichtung mindestens zwei Filterkammern 12 aufweist, die jeweils von einer Filterfläche 14 abgedeckt sind, daß in einem Schritt ein Teil der Filterflächen der Filtration einer Rohflüssigkeit dient und der andere Teil mit einer Reinigungsvorrichtung 16 von den bei der Filtration aufgefangenen Verschmutzungen reinigbar ist und daß in einem weiteren Schritt nach Bewegen des Filterkörpers 10 der bisher die Filtration übernehmende eine Teil reinigbar ist und der gereinigte andere Teil der Filterflächen 14 die Filtration übernimmt, läßt sich mit einer dahingehenden Filtriervorrichtung eine Vielzahl verschiedenster Filtrationsaufgaben lösen, wobei bei geringen baulichen Abmessungen eine hohe Filtrationsleistung erreichbar ist.

## Beschreibung

Das Abfiltrieren von Partikeln aus flüssigen Phasen mit gleichzeitigem kontinuierlichem Feststoffaustrag ist eine wesentliche Trennoperation, die in praktisch allen Technikbereichen Anwendung findet. Die Erzeugung eines von Partikeln jeglicher Konsistenz und Größe im beschriebenen Bereich befreiten Filtrats ist unabdingbare Voraussetzung zum störungsfreien Dauerbetrieb von partikelempfindlichen Geräten und Verfahren, seien es nachgeschaltete Werkzeugmaschinen, Reinigungsanlagen oder ähnliches, oder weitere chemisch-physikalische Behandlungsschritte. Wesentliche Eigenschaft einer solchen Filtriervorrichtung muß eine möglichst kontinuierliche Produktion von Filtrat und Feststoff sein.

Für dahingehende Filtrationsaufgaben ist bereits eine Vielzahl verschiedener Filtriervorrichtungen, wie Bandfilteranlagen, vorgeschlagen worden, die jedoch alle bestimmte prinzipielle Nachteile aufweisen, welche die Einsatzbandbreite dahingehender Filtriervorrichtungen teilweise erheblich imitieren. So bauen beispielsweise Bandfilteranlagen groß auf und sind sowohl teuer in der Herstellung als auch später bei notwendig werdenden Wartungsarbeiten.

Durch die DE 30 23 318 C2 ist eine Filtriervorrichtung mit den Merkmalen des Oberbegriffes des Patentanspruches 1 bekannt. Die bekannte Filtriervorrichtung weist einen horizontal um seine Längsachse drehbaren Filterkörper auf, der mit einer konkav-muldenförmigen Filterfläche in Form einer durchlässigen Filterwanne versehen ist. Diese dient zur Vorklärung von schlammhaltigen Grubenwässern und durch Kippen der Filterwanne um 180° läßt sich der in ihr aufgefangene Schlamm über ein Fördermittel abtransportieren, wobei der Filtriervorgang unterbrochen ist.

Durch das DE-GM 18 78 428 ist es bekannt, bei einer Filtriervorrichtung mehrere Filterkörper um eine Achse drehbar anzuordnen und mit einem Kuchenabstreifer den Filterkuchen von den Filterelementen zu entfernen, sobald das entlang einer Führung verfahrbare Filtergehäuse mit den Kuchenabstreifern von den Filterelementen abgezogen wird. Der derart abgestreifte Filterkuchen fällt in eine unterhalb der Filterelemente angeordnete Wanne, die dem anschließenden Abtransport des Filterkuchens dient. Ein quasi-kontinuierlicher Filtrierbetrieb ist mit dieser bekannten Vorrichtung ebenfalls nicht möglich.

In der US 49 61 864 ist zwar bereits vorgeschlagen worden, während des Filtrierbetriebes mit einem hin- und hergehenden Räumer eine Filterfläche zu reinigen und den Filterkuchen mittels einer Förderschnecke auszutragen, was einen quasi-kontinuierlichen Filtrierbetrieb ermöglicht; allein ein kontinuierlicher Partikelaustrag läßt sich auch mit dieser bekannten Filtriervorrichtung nicht erreichen, da an den Enden der Filterfläche es je nach Verfahrrichtung des Räumers in vorgebbaren Zeitabständen zu einer vermehrten Partikelkonzentration an Feststoffen kommt, die über die Förderschnecke abtransportierbar sind. Während des Reinigungsvorganges durch Verfahren des Räumers bei gleichzeitigem Filtrierbetrieb ist ein direkter Zugang zu der Filterfläche ver wehrt.

Ausgehend von diesem Stand der Technik liegt der Erfindung die Aufgabe zugrunde, eine Filtriervorrichtung für die eingangs genannten Filtrationsaufgaben zu schaffen, die sich vielfältig einsetzen läßt, bei hoher Filtrationsleistung geringe Abmessungen aufweist und sowohl in der Herstellung als auch im Betrieb kostengünstig ist. Eine dahingehende Aufgabe löst eine Filtriervorrichtung mit den Merkmalen des Anspruches 1.

Dadurch, daß die erfindungsgemäße Filtriervorrichtung mit dem bewegbaren Filterkörper versehen ist, der jweils mindestens zwei Filterkammern aufweist, die jeweils von einer Filterfläche abgedeckt sind, daß in einem Schritt ein Teil der Filterflächen der Filtration einer Rohflüssigkeit dient und der andere Teil mit einer Reinigungsvorrichtung von den bei der Filtration aufgefangenen Verschmutzungen reinigbar ist und daß in einem weiteren Schritt nach Bewegen des Filterkörpers der bisher die Filtration übernehmende eine Teil reinigbar ist und der gereinigte andere Teil der Filterflächen die Filtration übernimmt, ist eine Art quasi-kontinuierliche Filtration mit zeitlich entkoppelter, frei programmierbarer Filterreinigungs und -regeneration ermöglicht. Vorzugsweise wird dabei die Filterreinigung oder -regeneration gleichzeitig mit dem Filtrationsvorgang ür die Rohflüssigkeit durchgeführt. Mit der erfindungsgemäßen Filtriervorrichtung lassen sich hohe Partikelkonzentrationen und ein kontinuierlicher Partikelaustrag erreichen. Im Gegensatz zu bekannten Bandfilteranlagen ist eine direkte Zugünglichkeit der jweiligen, im Einsatz befindlichen Filterfläche gegeben und der jeweilige Filterkörper läßt sich leicht gegen einen neuen auswechseln, was die möglichen Stillstandszeiten der Anlage verringert.

Neben der möglichen kontinuierlichen Filtrieroperation mit der Filtriervorrichtung ist darüber hinaus keine Limitation für die Baugröße der Vorrichtung innerhalb vorgebbarer Grenzen nach oben oder unten gegeben, da diese im wesentlichen bis auf die Baugröße unverändert modulartig sich an bestehende Filtrationsaufgaben und -leistungen anpassen läßt.

Durch den muldenförmigen Aufbau der Filterflächen ist eine pumpenfreie Beschickbarkeit der Filtriervorrichtung mit der Rohlösung oder Rohflüssigkeit möglich, die also ohne weitere Druckbeaufschlagung für einen Filtriervorgang in den durch die Muldenform gebildeten Aufnahmeraum innerhalb des Filterkörpers einströmen kann. Mithin können oberflächenfiltrationsfähige, definierte Filtermaterialien ohne weitere Zusatzstoffe und ohne weitere Filtermaterialien zum Einsatz kommen.

Bei einer bevorzugten Ausführungsform der erfindungsgemäßen Filtriervorrichtung ist der jeweilige Filterkörper in einem wannenförmigen Filterbehälter um seine Längsachse drehbar angeordnet, wobei die Filterflächen um diese Längsachse diametral angeordnet sind. Aufgrund des wannenförmigen Filterbehälters lassen sich die abfiltrierten Feststoffpartikel in diesem zentral erfassen und abtransportieren.

Bei einer weiteren bevorzugten Ausführungsform der erfindungsgemäßen Filtriervorrichtung weist die für die Filtration der Rohflüssigkeit eingesetzte Filterkammer eine Abgabemöglichkeit für das Filtrat auf, die mittels einer Steuervorrichtung an die nachfolgende Filterkammer für die Fortführung der Filtration anschließbar ist, sofern die Filterfläche der vorangegangenen Filterkammer einen vorgebbaren Verschmutzungsgrad erreicht hat. Dahingehende Steuervorrichtungen, die man auch mit Steuerkopf bezeichnet, sind von Vakuum-Trommelfiltern der üblichen Bauart bekannt und es brauchen mithin keine "dynamischen" Dichtungen zwischen dem jeweiligen Filterkörper und einem Filtrat-Sammelraum vorgesehen zu werden, der die Abgabemöglichkeit für das Filtrat darstellt. Die Vermeidung von dynamischen Dichtungen kommt den geringen Herstellkosten und der Funktionssicherheit zugute. Des weiteren läßt sich über die Steuervorrichtung eine Filtratabsaugung mit hohem Unterdruck erreichen, was die Filtrierleistung der Anlage erhöht.

Vorzugsweise ist hierbei in Weiterbildung der Erfindung vorgesehen, daß als Reinigungsvorrichtung für die jeweils zu reinigende Filterfläche ein Reinigungsmittel vorgesehen ist, das über die Steuervorrichtung in die zugeordnete Filterkammer des Filterkörpers einleitbar ist. Aufgrund dieser Ausgestaltung läßt sich ein integrierter Filterreinigungskreislauf erreichen.

Bei einer weiteren bevorzugten Ausführungsform der erfindungsgemäßen Filtervorrichtung weist die Reinigungsvorrichtung eine Reinigungsbürste auf, die die Verschmutzungen von der zu reinigenden Filterfläche abbürstet. Mit einer dahingehenden axial und in der Höhe frei positionierbaren rotierenden Reinigungsbürste läßt sich sowohl die Reinigung der Filterfläche erreichen als auch diese Bürste zum Feststoffaustrag aus der Filterwanne benutzen. Vorzugsweise ist jedoch für den Feststoffaustrag eine Austragschnecke innerhalb der Filterwanne vorgesehen.

Bei einer besonders bevorzugten Ausführungsform der erfindungsgemäßen Filtriervorrichtung weist der Filterkörper in einer senkrechten Anordnung zwei in einer vertikalen Ebene angeordnete Filterflächen auf, von denen zunächst die obere für die Filtration der Rohflüssigkeit und die untere für die gleichzeitige Reinigung nach einer vorangehend durchgeführten Filtration vorgesehen ist. Bei einer dahingehenden Ausgestaltung läßt sich die jeweils aktive, zur Filtration eingesetzte Filterfläche einfach inspizieren und überwachen und im übrigen läßt sich ein dahingehender Zweikammer-Filterkörper mit schwenkbarer Aufhängung für Wartungsarbeiten schnell gegen einen neuen Filterkörper austauschen.

Bei einer weiteren besonders bevorzugten Ausführungsform der erfindungsgemäßen Filtriervorrichtung sind die Filterflächen aus einem flexiblen Filtermaterial gebildet, das konkav innerhalb der Filterkammer angeordnet der Filtration dient und das unter dem Einfluß der Schwerkraft konvex ausgewölbt die bei der Filtration aufgefangenen Verschmutzungen freigibt. Hierdurch ergibt sich ein Reinigungs- oder Regeneriereffekt durch Umstülpen und damit verbundener Porenöffnung während des Rückspülvorganges für die konvex ausgewölbte Filterfläche.

Im folgenden ist die erfindungsgemäße Filtriervorrichtung anhand der Zeichnung näher erläutert.

Es zeigen in prinzipieller und nicht maßstäblicher Darstellung die
- Fig.1: eine perspektivische Ansicht auf den mechanischen Grundaufbau der Filtriervorrichtung;
- Fig.2: einen schematisierten Prozeßablaufplan unter Einsatz der Filtriervorrichtung;
- Fig.3: den prinzipiellen Ablauf des Filtrierens und Regenerierens mit einem in der Filtriervorrichtung eingesetzten, umstülpbaren Filtermittel.

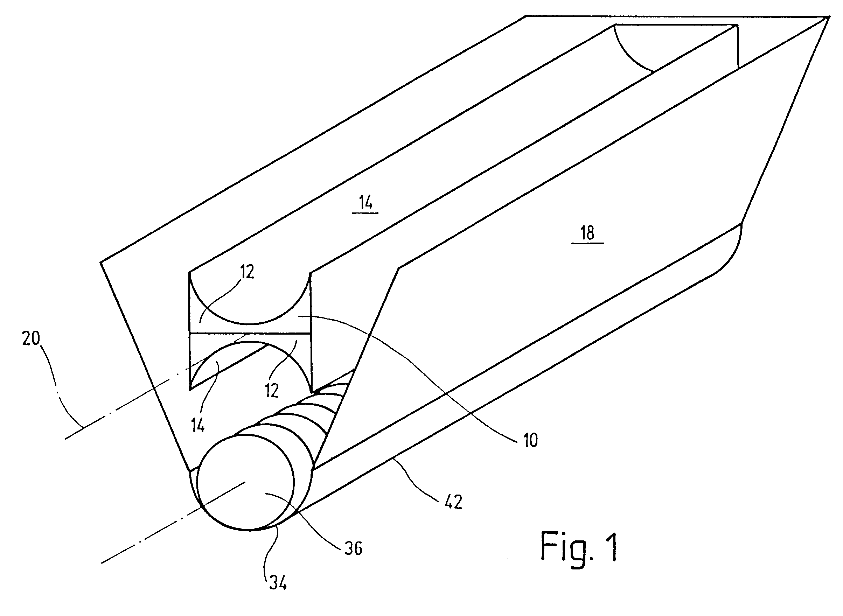

Die erfindungsgemäße Filtriervorrichtung nach der Fig.1 weist einen bewegbaren Filterkörper 10 auf, der mittensymmetrisch in zwei einzelne Filterkammern 12 unterteilt ist. Jede Filterkammer 12 ist von einer muldenförmigen, insbesondere von der Mitte des Filterkörpers 10 aus gesehen im Querschnitt konkav ausgebildeten Filterfläche 14 abgedeckt. In einem ersten Schritt dient ein Teil der Filterflächen in Form der in Fig.1 gesehen zuoberst angeordneten Filterfläche 14 der Filtration einer von oben her zuführbaren Rohflüssigkeit, wohingegen der andere Teil in Form der zuunterst angeordneten Filterfläche 14 mit einer als Ganzes mit 16 bezeichneten Reinigungsvorrichtung von den bei der vorangegangenen Filtration aufgefangenen Verschmutzungen, insbesondere in Form von Partikeln, reinigbar ist.

Der in der Fig.1 gezeigte Filterkörper 10 ist in einem wannenförmigen, insbesondere V-förmigen Filterbehälter 18 angeordnet und dort um seine Längsachse 20 drehbar geführt. Der besseren Darstellung wegen wurde die dem Betrachter zugewandte Stirnwand des Filterbehälters 18 weggelassen, ebenso wie die Lagerstellen am Filterbehälter 18 für die Schwenkbewegung des Filterkörpers 10 um seine Längsachse 20. Ebenso wurde auf die Darstellung eines üblichen Elektroantriebes für die Schwenkbewegung des Filterkörpers 10 verzichtet. Die Filterflächen 14 sind, wie dies insbesondere die Fig.1 zeigt, um die Längsachse 20 des Filterkörpers 10 diametral angeordnet. Anstelle des in der Fig.1 gezeigten bi-konkaven Querschnitts des Filterkörpers 10 kann dieser auch eine andere muldenförmige Gestalt aufweisen. Der Filterbehälter 18 ist selbsttragend und kann an beliebigen Einsatzorten für eine Filtration aufgestellt werden.

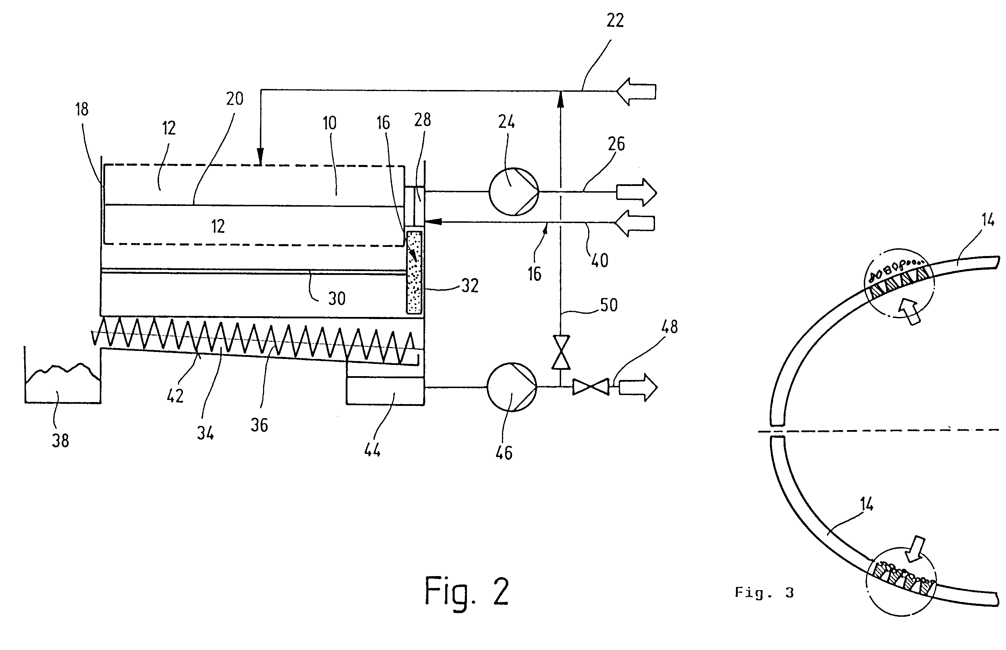

Wie insbesondere der Prozeßablaufplan nach der Fig.2 zeigt, wird eine zu filtrierende Rohflüssigkeit in Pfeilrichtung über die Rohrleitung 22 der Oberseite des Filterkörpers 10 zugeleitet und wird von der oberen Mulde für die weitere Filtrierung über die obere Filterfläche 14 aufgenommen. Die dahingehend aktive Filtermulde wird mithin, ähnlich wie bei einem Bandfilter, von oben mit Rohlösung beaufschlagt, wobei, um eine möglichst gleichmäßige Verteilung der Rohlösung über der Filterfläche zu erreichen, das mit 22 bezeichnete Zulaufrohr entsprechend der Muldenlänge verzweigt oder in Längsrichtung hin- und herbewegt werden kann.

Um die Filtrierleistung zu erhöhen, ist die als jeweilige Hohlkammer ausgebildete Filterkammer 12, die die Rohflüssigkeit filtriert, an eine Saug- und Filtratpumpe 24 angeschlossen, die in Pfeilrichtung gesehen über die Rohrleitung 26 das Filtrat nach außen, beispielsweise in einen nicht dargestellten Filtrat-Sammelbehälter, führt. Über die mit 28 bezeichnete Steuervorrichtung ist die bis auf die Muldeninnenseite geschlossene, filtrierende Filterkammer 12 wannenseitig in dichtender Anordnung an die Saugpumpe 24 angeschlossen. Sofern große Filterflächen 14 zu realisieren sind, können auch einzelne Filterkörper-Segmente, beispielsweise durch Hintereinanderanordnung mehrerer Filterkörper 10, in Längsrichtung miteinander verbunden sein. Durch die angesprochene Steuervorrichtung 28 sind also mithin die Filtraträume mit der jeweiligen Außeninstallation dicht verbunden. Über die Saugpumpe 24 läßt sich erreichen, daß ständig in die obere Mulde eingebrachte Rohlösung mittels der Filtriervorrichtung filtriert wird. Gleichzeitig aber auch zeitlich nachfolgend kann die unten befindliche Filterfläche 14 von den bei der vorangegangenen Filtration aufgefangenen Partikeln befreit, gereinigt und regeneriert werden.

Für die Reinigung können dabei Mittel, wie Abspritzen, Abbürsten, Rückspülen, zur Reinigung und Regeneration der hierfür bestimmten Filterfläche 14 vorgesehen werden. In der Darstellung nach der Fig.2 dient als Reinigungsvorrichtung eine längs einer Mittenachse 30 verschiebbare und rotierende Reinigungsbürste 32, die die nach unten gedrehte Filtermulde abbürstet und von den aufgefangenen Partikeln befreit. Alternativ oder zusätzlich kann gleichzeitig aber auch zeitlich versetzt die in Rede stehende Filteroberfläche abgespritzt oder abgedampft werden. Der Austrag der in einer Bodenrinne 34 des Filterbehälters 18 liegenden, von der Filterfläche 14 entfernten Partikel kann über eine Austrag- oder Förderschnecke 36 erfolgen oder alternativ unmittelbar durch die Reinigungsbürste 32, die für eine dahingehende Operation abgesenkt und ohne Rotation nur axial in Richtung der in der Fig.2 gesehen zuvorderst liegenden Austragöffnung bewegbar ist. Die dahingehend aus der Vorrichtung ausgetragenen Partikel lassen sich in einem Sammelbehälter 38 auffangen, um sie einer weiteren Entsorgung zuzuführen.

In der Darstellung nach der Fig.2 weist die Reinigungsvorrichtung 16 lieben der Reinigungsbürste 32 eine Rückspülmöglichkeit der zuunterst angeordneten Filterkammer 12 auf, die über die Steuervorrichtung 28 an eine Zuführleitung 40 anschließbar ist, über die in Pfeilrichtung gesehen als Reinigungsmittel Luft, Wasser, Filtrat oder geeignete Reiniger zuführbar sind. Das die untere Filterfläche 14 durchströmende jeweilige Reinigungsmittel kann über eine schrägverlaufende Führungsfläche 42 einem Ablauf-Flüssigkeitsbehälter 44 auf der Unterseite des Filterbehälters 18 zugeführt werden, von wo aus über eine weitere Saug- oder Ablauf-Flüssigkeitspumpe 46 das Reinigungsmittel, insbesondere in Form eines hierfür geeigneten Reinigers, über die Ablaufleitung 48 aus dem ansonsten geschlossenen Kreislauf abführbar ist.

Zum Herbeiführen eines geschlossenen Kreislaufes ist hinter der Saugpumpe 46 eine fluidführende Verbindung 50 mit der Rohrleitung 22 für die Zuführung der Rohflüssigkeit hergestellt. Beispielsweise kann für einen Reinigungsvorgang einer ersten Gasrückspülung der unteren Filterfläche 14 ein Abbürstvorgang mittels der Reinigungsbürste 32 folgen und dann anschließend eine Heißwasserrückspülung oder Dampfrückspülung. Das flüssige Reinigungsmittel, beispielsweise in Form von Heißwasser, läßt sich in einem separaten Kreislauf (nicht dargestellt) führen und ist damit mehrfach verwendbar und bleibt vom Filtrat oder Partikelkonzentrat getrennt. Die in der Bodenwanne des Filterbehälters 18 liegenden Partikel können durch herunterregnende Rückspülflüssigkeit aus dem Filterkörper 10 gewaschen werden und die durchsickernde Flüssigkeit wird durch die Schrägstellung der Führungsfläche 42 der Rinne am tiefsten Punkt vor Partikeldurchbruch geschützt über ein Wehr abgezogen. Die dahingehend mit dem Wehr versehene Auffangrinne an der Unterseite des Filterbehälters 18 läßt sich dann zur bereits angesprochenen Kreislaufführung von Reinigungs- oder Regenerierungslösung benutzen.

Nach einem frei wählbaren Zeitintervall oder ausgelöst durch ein Lichtschranken-, Wäge- oder Filtratfluß-Signal, wird die bisher zur Filtration eingesetzte obere Filtermulde um 180° um die angesprochene Längsachse 20 geschwenkt. Die Schwenkzeit liegt hierbei im einstelligen Sekundenbereich. Die gereinigte und regenerierte, nun oben befindliche Filtermulde übernimmt dann die weitere Filtration der über die Rohrleitung 22 zugeführten Rohflüssigkeit, während die untere verschmutzte Filtermulde nach einem auf die jeweilige Rohlösung abstimmbaren, bereits angesprochenen Reinigungs- und Regenerationsvorgang behandelt wird. Die stationär angeordnete Steuervorrichtung 28 garantiert dabei die richtigen Anschlüsse für Filtratablauf und Einleiten des Reinigungsmittels aus bzw. in die jeweils zugeordnete Filterkammer 12.

Als Filtermaterialien zur Bildung der Filterflächen 14 lassen sich verschiedenste Gewebe einsetzen, wie Filtertressen, poröse Drahtgewebe verschiedenster Webarten, Laminate aus Kunststoff und/oder Metall. Sofern die Filtergewebematerialien entsprechend nachgiebig und in sich bewegbar gewählt werden, ist es möglich, daß zunächst konkav innerhalb der Filterkammer 12 angeordnete Filtermittel 14, das der Filtration dient, anschließend bei Verschwenken der Filterfläche 14 in ihre untere Totpunktstellung unter dem Einfluß der Schwerkraft und/oder einer Rückspülflüssigkeit derart konvex auszuwölben, daß die Filterporen die bei der Filtration aufgefangenen Partikel-Verschmutzungen freigeben. Um diesen Umstülpvorgang zu verdeutlichen, wird Bezug auf Fig.3 genommen, die in der unteren Bildhälfte die konkave, für die Filtration vorgesehene Anordnung des Filtermittels 14 zeigt. Bei der dahingehend konkaven filtierenden Anordnung sind die Poren des Filtermittels 14 zur Aufnahmeseite der Rohflüssigkeit hin verengt. Wird anschließend das Filtermittel 14 in seine untere Totpunktstellung verschwenkt, wölbt es sich konvex nach unten hin aus und die bisher in den Poren des Filtermittels 14 festgehaltenen Partikel werden durch die entsprechende Durchmesservergrößerung der Poren, wie in der Fig.3 in der oberen Bildhälfte dargestellt, für den weiteren Austragprozeß freigegeben.

Die beschriebene Filtriervorrichtung läßt sich vorzugsweise als Vorfilter vor einer Membran-Trennanlage einsetzen. Membran-Trennverfahren ermöglichen feinste Stofftrennungen bis hin zu kleinsten Molekülgrößen. Die dafür benötigten Filtermedien sind naturgemäß sehr fein und demgemäß entsprechend empfindlich. Beschädigungen durch scharfkantige Partikel müssen ausgeschlossen werden. Schon ein einziges Partikel kann beträchtliche Schädigungen bei der Membrantrennung hervorrufen. Oftmals sind die Strömungskanäle in Membranmodulen derart eng bemessen, daß mit 5 Mikrometer und weniger vorfiltriert werden muß.

Ein in beliebigen Baugrößen realisierbarer Vorfilter, bei dem aufgrund der Bauweise Partikeldurchbrüche ausgeschlossen sind und der nur die abfiltrierten Partikel als Feststoff produziert, stellt mithin eine sehr wirtschaftliche und auch ökologisch einwandfreie Lösung dar. Besonders durch die großen Freiheitsgrade bei Auswahl und Feinabstimmung der Filterregeneration auf die vielfältigen Rohlösungen, die in der Membrantechnik zu verarbeiten sind, ist die erfindungsgemäße Filtrationsvorrichtung auch in schwierigen Vorfiltrationsproblemen in vorteilhafter Weise einsetzbar.

Eine weitere bevorzugte Anwendung der erfindungsgemäßen Filtrationsvorrichtung liegt in der Filtration von Spänen, Abrieb, Schleifpartikeln od.dgl. bei Werkzeugmaschinen. Moderne Werkzeugmaschinen, ob spanabhebend, schleifend, erodierend oder ähnlich arbeitend, müssen durch ein Umlauffluid gekühlt und zum Teil geschmiert werden. Naturgemäß entstehen während des Bearbeitungsvorganges Partikel, die zusammen mit der eventuellen ursprünglichen Verschmutzung des Werkstückes vom Umlauffluid aufgenommen und abtransportiert werden. Da diese nicht mehr in die Maschine zurücktransportiert werden dürfen, ist eine Entfernung derselben zwingend notwendig. Besonders kleinere Partikel im Bereich von wenigen Mikrometern müssen quantitativ abgetrennt werden, damit die Reinheit des Umlauffluids den immer weiter ansteigenden Anforderungen der Präzisionsmaschinen genügt.

Gegenüber den heutzutage in diesen Anwendungen hauptsächlich verwendeten Bandfiltern weist die erfindungsgemäße Filtriervorrichtung neben der benötigten Dichtheit auch bei kleinsten Filterporen eine optimale Regenerierbarkeit auf. Bei Verwendung moderner Hochleistungsfiltergewebe stellt der beschriebene Muldenfilter eine wesentliche Verbesserung im Hinblick auf den Stand der Technik dar.

## Patentansprüche

1. Filtriervorrichtung mit mindestens einem um seine Längsachse (20) drehbar gelagerten, mindestens eine muldenförmige Filterfläche (14) aufweisenden Filterkörper (10), dadurch gekennzeichnet, daß der Filterkörper (10) jeweils mindestens zwei Filterkammern (12) aufweist, die jeweils von einer Filterfläche (14) abgedeckt sind, daß in einem Schritt ein Teil der Filterflächen (14) der Filtration einer Rohflüssigkeit dient und der andere Teil mit einer Reinigungsvorrichtung (16) von den bei der Filtration aufgefangenen Verschmutzungen reinigbar ist und daß in einem weiteren Schritt nach Bewegen des Filterkörpers (10) der bisher die Filtration übernehmende eine Teil reinigbar ist und der gereinigte andere Teil der Filterflächen (14) die Filtration übernimmt.

2. Filtriervorrichtung nach Anspruch 1, dadurch gekennzeichnet, daß der jeweilige Filterkörper (10) in einem wannenförmigen Filterbehälter (18) angeordnet ist und daß die Filterflächen (14) um die Längsachse (20) diametral angeordnet sind.

3. Filtriervorrichtung nach Anspruch 1 oder 2, dadurch gekennzeichnet, daß die für die Filtration der Rohflüssigkeit eingesetzte Filterkammer (12) eine Abgabemöglichkeit für das Filtrat aufweist, die mittels einer Steuervorrichtung (28) an die nachfolgende Filterkammer (12) für die Fortführung der Filtration anschließbar ist, sofern die Filterfläche (14) der vorangegangenen Filterkammer (12) einen vorgebbaren Verschmutzungsgrad erreicht hat.

4. Filtriervorrichtung nach Anspruch 3, dadurch gekennzeichnet, daß als Reinigungsvorrichtung (16) für die jeweils zu reinigende Filterfläche (14) ein Reinigungsmittel vorgesehen ist, das über die Steuervorrichtung (28) in die zugeordnete Filterkammer (12) des Filterkörpers (10) einleitbar ist.

5. Filtriervorrichtung nach einem der Ansprüche 1 bis 4, dadurch gekennzeichnet, daß die Reinigungsvorrichtung (16) eine Reinigungsbürste (32) aufweist, die die Verschmutzungen von der zu reinigenden Filterfläche (14) abbürstet und daß die Verschmutzungen mittels einer Austragsschnecke (36) abtransportierbar sind.

6. Filtriervorrichtung nach einem der Ansprüche 1 bis 5, dadurch gekennzeichnet, daß der Filterkörper (10) in einer senkrechten Anordnung zwei in einer vertikalen Ebene angeordnete Filterflächen (14) aufweist, von denen zunächst die obere für die Filtration der Rohflüssigkeit und die untere für die gleichzeitige Reinigung nach einer vorangehend durchgeführten Filtration vorgesehen ist.

7. Filtriervorrichtung nach einem der Ansprüche 1 bis 6, dadurch gekennzeichnet, daß die Filterflächen (14) aus einem flexiblen Filtermaterial gebildet sind, das konkav innerhalb der Filterkammer (12) angeordnet der Filtration dient und das unter dem Einfluß der Schwerkraft konvex ausgewölbt die bei der Filtration aufgefangenen Verschmutzungen freigibt.
